# EUROPEAN PATENT APPLICATION

(11) **EP 2 471 377 A1**
(43) Date of publication of application: **04.07.2012**
(21) Application number: 11191842.1
(22) Date of filing: 05.12.2011
(51) Int. Cl.: A23G 9/04, A23G 9/22

(54) **Method and apparatus for temperature controlled treatment of liquid and/or kneadable materials**

(30) Priority: 28.12.2010 SI 201000458
(71) Applicant: Rokmar d.o.o., 5000 Nova Gorica (SI)
(72) Inventor: Stegel, Simon, 6258 Prestranek (SI); Jejcic, Marijan, 5250 Solkan (SI)
(74) Representative: Ivancic, Bojan

(57) **Abstract**

The present invention refers to a process of temperature controlled treatment of liquid and/or kneadable substances, such as an ice cream production, an ice cream material pasteurization, and similar, and to an apparatus for carying out said process. Said process comprises input of material to be treated into a container, agitating said material in the container by means of an impeller with simultaneous supply/discharge of heat by means of a cool/heat generator, continuous reading temperature of said material by means of at least one temperature sensor, and controlling continuously said cool/heat generator by means of said controller.

## Description

The present invention refers to a process of temperature controlled treatment of liquid and/or kneadable substances, such as an ice cream production, an ice cream material pasteurization, and similar, and to an apparatus for carrying out said process.

Known apparatuses, particularly for an ice-cream production, an ice cream material pasteurization, and similar comprise a container to receive material to be treated, an impeller arranged within said container for mixing the material to be treated, and a device to supply and discharge the heat to the material to be treated. Thus, with known apparatuses for the ice cream production the power for cooling the material to be treated is constant, resulting in an ice deposit creating on the inner wall of said container. The consequence thereof is that the impeller blades slip on said ice deposit and fail to scrape said material entirely off the wall of said container. As a result, the ice cream production time extends, and also the quality of the final product decreases due to the different crystalline structure. In addition, the impeller blades are subjected to overloading.

It is the object of the present invention to create a process of temperature controlled treatment of liquid and/or kneadable substances, such as an ice cream production, an ice cream material pasteurization, and similar, eliminating thus drawbacks of the known solutions.

Further object of the present invention is to create an apparatus for carrying out said process.

The object as set above is solved with the characteristics according to the claim 1.

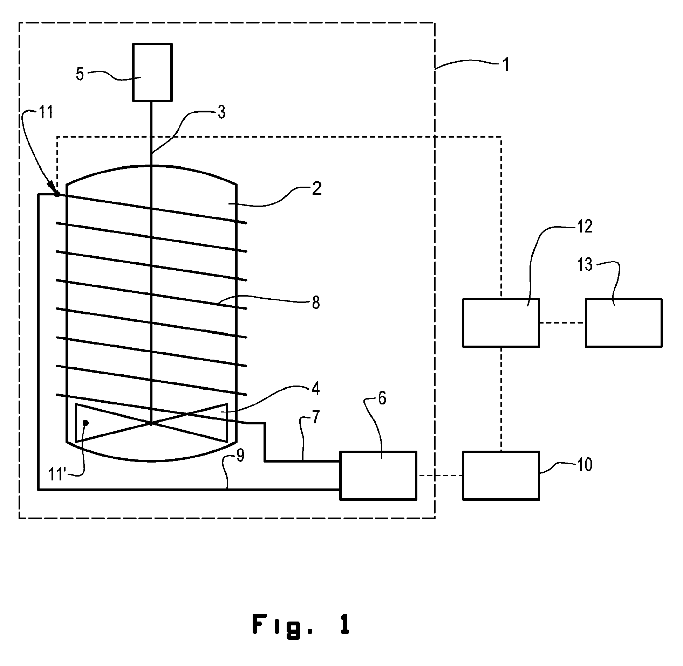

The invention is further described in detail on the basis of the preferred embodiment of a process and an apparatus for ice cream production, and with reference to the accompanying drawing, where it is schematically shown an apparatus for carrying out the process according to the invention.

According to the present invention, an apparatus 1 for an ice cream production comprises a container 2 into which material for the ice cream production is supplied, preferably a pasteurized material, and afterwards the container 2 is tightly shut. An impeller 3 being arranged in said container 2 comprising a plurality of blades 4 and driven by means of a drive 5. Said impeller 3 with the blades 4 agitates said material, said container 2 and the material therein being cooled simultaneously. The cooling is provided by means of a cooling aggregate 6 supplying cooling medium via a supply line 7 into a heat exchanger 8 being tightly wound in a helical manner about said container 2. Said cooling medium cools by means of said heat exchanger 8 the material to be treated being comprised in the container 2, and flows back via return line 9 into said cooling aggregate 6.

Said cooling aggregate 6 is controlled by means of a controller 10 which receives data as to the temperature conditions of the material to be treated from a temperature sensor 11 sensing constantly the appropriate parameters. It is provided for according to the present invention that said controller 10 is a frequency converter, said data about the temperature conditions of the material to be treated being processed in a processing unit 12 before entering said controller 10. Based on the information processed in said processing unit 12, said controller continuously modifies the cooling power of the cooling aggregate 6 resulting in a continuous alteration of the temperature of the material to be treated in the container 2. Optionally, the entire time line of the process can be shown on a display 13 associated with said processing unit 12. Optionally, said display 13 being intended to enter into said processing unit 12 a programme for controlling the process of the ice cream production.

According to the present invention, there is provided at least one said temperature sensor, with the particular embodiment there are provided at least two temperature sensors 11, 11', the first temperature sensor 11 being arranged at the outlet end of said heat exchanger 8, and at least one second temperature sensor 11' being incorporated into at least one said blade 4 of said impeller 3 arranged within said container 2. The first sensor 11 reads the outgoing temperature of the cooling media and continuously transmits read data to said processing unit 12. Said data can be transmitted from said temperature sensor 11 to said processing unit 12 either via physical line or wireless. The second temperature sensor 11' continuously reads the direct temperature of the material to be treated, the readouts being continuously transmitted wireless into said processing unit 12. In this manner, significant improvement of the heat treatment of the material is achieved, since the second sensor 11' continuously in direct contact with the material to be treated.

It is however, obvious for a skilled person from the particular field that the invention may also be utilised with other related apparatuses and processes such as with an apparatus for pasteurization the ice cream material, without departing from the spirit and scope of the present invention.

## Claims

1. A process of temperature controlled treatment of liquid and/or kneadable substances, such as an ice cream production, an ice cream material pasteurization, and similar, ***characterized* in *that*** it comprises
(a) input of material to be treated into a container;
(b) agitating said material in the container by means of an impeller with simultaneous supply/discharge of heat by means of a cool/heat generator;
(c) continuous reading temperature of said material by means of at least one temperature sensor;
(d) transmitting readouts about temperature conditions of said material from said temperature sensor to a processing unit where said readouts being processed;
(e) transmitting information based on the processed readouts from said processing unit to a controller of the cool/heat generator;
(f) controlling continuously said cool/heat generator by means of said controller.

2. A process of temperature controlled treatment of liquid and/or kneadable substances according to claim 1, ***characterized* in *that*** said continuous control of the cool/heat generator by means of said controller results in a continuous alteration of the temperature of the material to be treated.

3. A process of temperature controlled treatment of liquid and/or kneadable substances according to claims 1 and 2, ***characterized* in *that*** the readouts being transmitted wireless from said temperature sensor to the processing unit.

4. An apparatus for carrying out a process of temperature controlled treatment of liquid and/or kneadable substances, such as an ice cream production, an ice cream material pasteurization, and similar, comprising a container (2) with an impeller (3), the temperature of the interior of said container (2) being controlled by means of a heat exchanger (8) supplied by a cool/heat generator (6), ***characterized* in *that*** it comprises at least one temperature sensor (11, 11') attached to the section of said impeller (3) being constantly in contact with material to be treated, said sensor (11, 11') being connected via a processing unit (12) with a controller (10) controlling said cool/heat generator (6).

5. An apparatus for carrying out a process of temperature controlled treatment of liquid and/or kneadable substances according to claim 4, ***characterized* in *that*** it comprises first temperature sensor (11) arranged at the outlet end of said heat exchanger (8), and second temperature sensor (11') attached to the section of said impeller (3) being constantly in contact with material to be treated.

6. An apparatus for carrying out a process of temperature controlled treatment of liquid and/or kneadable substances according to claims 4 and 5, ***characterized* in *that*** data are transmitted wireless from said temperature sensor (11, 11') to said processing unit (12).

7. An apparatus for carrying out a process of temperature controlled treatment of liquid and/or kneadable substances according to claims 4 to 6, ***characterized* in *that*** said temperature sensor (11') built into said impeller (3) is constantly in direct contact with material to be treated.
